(19) Europäisches Patentamt
European Patent Office
Office européen des brevets

(11) EP 2 779 102 A1

(12) EUROPEAN PATENT APPLICATION

(43) Date of publication:
17.09.2014 Bulletin 2014/38

(51) Int Cl.:
G06T 13/20 (2011.01)    G06T 19/00 (2011.01)

(21) Application number: 13158736.2

(22) Date of filing: 12.03.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: E.sigma Systems GmbH
85609 Dornach (DE)

(72) Inventor: DICHTER, Jean-Paul
85609 Dornach (DE)

(74) Representative: MERH-IP
Matias Erny Reichl Hoffmann
Paul-Heyse-Strasse 29
80336 München (DE)

(54) **Method of generating an animated video sequence**

(57)    A method for generating an animated video sequence comprises obtaining (100) a photographic image of a scene and determining (102) a projection function of the photographic image, wherein the projection function maps the three-dimensional scene onto the two-dimensional photographic image. A three-dimensional model of an animated object is obtained (104) and the animated object is transformed (106) into a series of two-dimensional object images based on the obtained projection function. The two-dimensional object images are then merged (108) with the photographic image.

Fig. 1

## Description

## Background

The invention relates to simulation devices and methods for providing a realistic training scenario e.g. for police forces, military personnel and the like during preparation for a specific mission at a given location. During such a simulation, test persons are generally shown a simulated video sequence which depicts scenarios that may occur during a mission. Thus, test persons can become familiar with a location and with the simulated scenario before the mission commences. Further, with an interactive scenario, test persons can practice responding to a variety of possible situations and can determine a promising strategy for the mission. In this respect, it is advantageous if the simulation is set in an accurate reflection of the real location in which the mission is to take place. Hence, ideally, the simulation is purpose-built for a specific mission. The use of existing simulation scenarios and devices which are aimed at general education and training purposes cannot reflect the details and peculiarities of a specific location and mission.

Education and training devices which provide a realistic visual representation of the environment of the training scenario typically lead to complex and expensive 3D modeling activities in order to create the geometry of the environment (terrain, buildings, vegetation) as well as 3D models of moving objects like cars, people, animals etc.

This huge effort can only be justified if the 3D environment is used in full mission training simulators which are in use with the same scenario over a long period of time. Simulation systems which are used in time critical mission planning or mission rehearsal will typically not justify the effort involved in creating complex 3D scenarios.

As an alternative to the 3D modeling, a method called video authoring is known, which allows predefined situations to be created using a static photographic background. Motion videos of scenario related characters are produced in "blue screen" studios and merged into the static background images. While this method appears less complex and expensive than detailed 3D modeling, it still requires the availability of studio equipment, technical operators and trained actors.

Thus, there is a need for a universal simulation method and device which allows the creation of a scenario for mission rehearsal in a specific location in a fast and cost-effective manner.

## Summary

Embodiments of the present invention provide a method for generating an animated video sequence. Therein, a photographic image of a scene is obtained. The photographic image may be recorded with a camera, or it may be obtained from an image archive. A projection function of the photographic image is determined, wherein the projection function maps the three-dimensional scene onto the two-dimensional photographic image. Further, a three-dimensional model of at least one animated object is obtained. The model can be constructed by known computer modeling techniques and may be directed at generating motion and behavior of the at least one animated object according to model parameters that are explained in greater detail below. Therein, the at least one animated object may include a person, a vehicle or a visual effect. The animated object is then transformed based on the projection function into a series of two-dimensional object images that correspond to the positions of the animated object in the three-dimensional model and its positions and sizes in the photographic image during the animated sequence. Finally, the two-dimensional object images are merged with the photographic image.

Thus, the animated object is generated within the three-dimensional model and is subsequently converted into a series of two-dimensional images which are then merged with the original photographic image of a scene. The correct sizing and perspective of the animated object are provided by the projection function that is derived from the photographic image. Thus, a photographic image can easily be converted into an animated video sequence including at least one animated object, without the need to build a full three-dimensional model representation of the scene depicted in the photographic image. Instead, animated content is simply added into the photographic image.

According to embodiments, the merging may be based on depth information of the two-dimensional object images and on depth information of elements of the photographic image. Thus, the merging step may receive four different streams of input data: image information from the photographic image and from the two-dimensional object images, and depth information for elements of the photographic information and for the at least one animated object in each two-dimensional object image. The image information is combined to form the final image, wherein the depth information may be used to ensure that spatial relationships between the animated object and the elements of the photographic image are observed in the merged image.

According to embodiments, the method may further comprise the step of determining depth information related to elements of the photographic image based on the projection function. Thus, depth information related to elements of the photographic image can be derived from the photographic image.

According to embodiments, the method may further comprise determining a location map of the scene, wherein positions and sizes of elements of the location map correspond to positions and sizes of elements in the photographic image. Thus, relevant information from the photographic image, such as e.g. the locations of buildings or other fixed structures shown in the photographic image, can be incorporated into the three-dimensional model without the need to provide a full model representation of these elements of the photographic image. The location map can provide restrictions to model parameters, such that the at least one animated object of the model is controlled within the constraints defined by the location map.

Therein, motion parameters of the animated object may be determined according to the positions and sizes of the elements of the location map. Thus, the three-dimensional model can provide a realistic scenario, wherein animated persons e.g. hide behind elements shown in the photographic image or move along plausible paths within the scene shown in the photographic image.

According to embodiments, the step of obtaining the projection function may comprise analyzing at least a part of the photographic image using a single view metrology method in order to obtain a homography matrix which defines the mapping of a real-world object plane into an image plane in the photographic image. A projection function can be determined from the homography matrix. Further, the homography matrix can be used for determining depth information of a selected image element by mapping a three-dimensional plane onto the photographic image and by determining the position and depth position of a three-dimensional "caliper" rectangle that is mapped directly onto the selected image element.

Therein, analyzing at least a part of the photographic image may comprise detection of vanishing lines. Vanishing lines may be detected automatically using edge detection techniques or may be identified by a user. The vanishing lines may then be used to determine the perspective distortion of elements of the photographic image, such that the homography matrix may be determined based on the analysis of vanishing lines and/or of vanishing points.

According to embodiments, the photographic image may comprise an image of a calibration pattern. The step of obtaining the projection function may be performed using the known size and/or position of the real-world calibration pattern that is depicted in the photographic image. A real-world calibration pattern with known size and/or position may be used for efficient automatic processing of the photographic image, as the projection function of the photographic image can then be derived from the image of the calibration pattern.

According to embodiments, the depth information of the elements of the photographic image may be provided by a laser scanning device. Thus, highly accurate depth information for elements of the photographic image may be provided without the need to analyze the photographic image.

According to embodiments, the step of merging the two-dimensional object images with the photographic image may comprise determining occlusions and eliminating parts of the two-dimensional object images which are obstructed by elements of the photographic image. Further, the step of merging the two-dimensional object images with the photographic image may comprise determining occlusions and eliminating parts of an element of the photographic image which is obstructed by a two-dimensional object image. Thus, the merged image includes realistic spatial relationships between elements of the photographic image and the animated objects, wherein an animated object may e.g. be partly hidden behind structures shown in the photographic image.

According to embodiments, obtaining the projection function may comprise determining a position of the camera, a camera orientation and optical parameters for the photographic image. From known values of e.g. a focal length and an aperture of the camera objective, properties of the photographic image, such as e.g. distortions of real-world straight lines in the image or the depth and location of focus in the photographic image can be determined. These properties may then be reflected in the projection function for the generation of two-dimensional object images, so that the final merged image looks even more realistic.

According to embodiments, the method may further comprise displaying the merged images as an animated video sequence. Therein, a subsequent image in the series of two-dimensional object images may be selected based on user input received during the display of the animated video sequence. Thus, user interaction with the animated video sequence can be achieved, and the animated video sequence can form part of an education and/or training device that can prepare a user for a complex scenario such as e.g. a police mission in a particular environment.

According to embodiments, shadows of elements in the photographic image may be determined within the three-dimensional model and may be included in the two-dimensional object images. Additionally, shadows of animated model objects may be determined and may be merged into the photographic image. This provides a more realistic representation of the animated objects acting in the scene shown in the photographic image.

Further, a computer program product is provided comprising instructions, which, when loaded into a processor of a suitable computing device, cause the computing device to perform the above-described method.

Finally, a device is provided for providing an animated video simulation of a scene. According to embodiments, the device may comprise a memory for storing a photographic image of a scene and for storing a three-dimensional model of at least one animated object. The device may further comprise a processor adapted to determine a projection function of the photographic image, wherein the projection function maps the three-dimensional scene onto the two-dimensional photographic image, transform the animated object based on the obtained projection function into a series of two-dimensional object images, and merge the two-dimensional object images with the photographic image. A display may be provided for displaying the merged images as an animated video sequence. Such a display may e.g. comprise a projection screen or a projection wall for providing an immersive impression for the user. A user interface may further be provided, which is adapted to receive user input. The user interface may comprise e.g. an electronic shooting range, wherein the aiming and firing of a mock gun may be received as user input. Alternatively, the user interface may comprise any input device which can receive input related to a user's reaction to the displayed video simulation. The processor is further adapted to select a subsequent image in the series of two-dimensional object images based on user input received via the user interface during the display of the animated video sequence.

The present description is mainly explained via embodiments of a method. However, it is to be understood, that any features described in terms of method steps may also be implemented as device features and vice versa.

**Detailed description**

The invention is explained below in an exemplary manner with reference to the accompanying drawings, wherein:

> Fig. 1 shows a flow diagram of a method according to an embodiment;
> Fig. 2 shows a further flow diagram of a method according to an embodiment
> Fig. 3 shows an example of a photographic image which may be used within the method shown in Fig. 1;
> Fig. 3a shows an example of a photographic image with a calibration pattern which may be used within the method shown in Fig. 1;
> Fig. 4 shows an example for position information extracted from the image of Fig. 3;
> Fig. 5 shows a schematic structure of a device according to an embodiment; and
> Fig. 6 shows a flow diagram of a method for extracting a projection function of a photographic image.

A method according to an embodiment is directed at creating an animated video sequence which is set in a realistic setting in an existing real-world location. Such a sequence may e.g. be used in police training and mission preparation, when several scenarios may be simulated and practiced using the actual scene where the real-world mission will later take place.

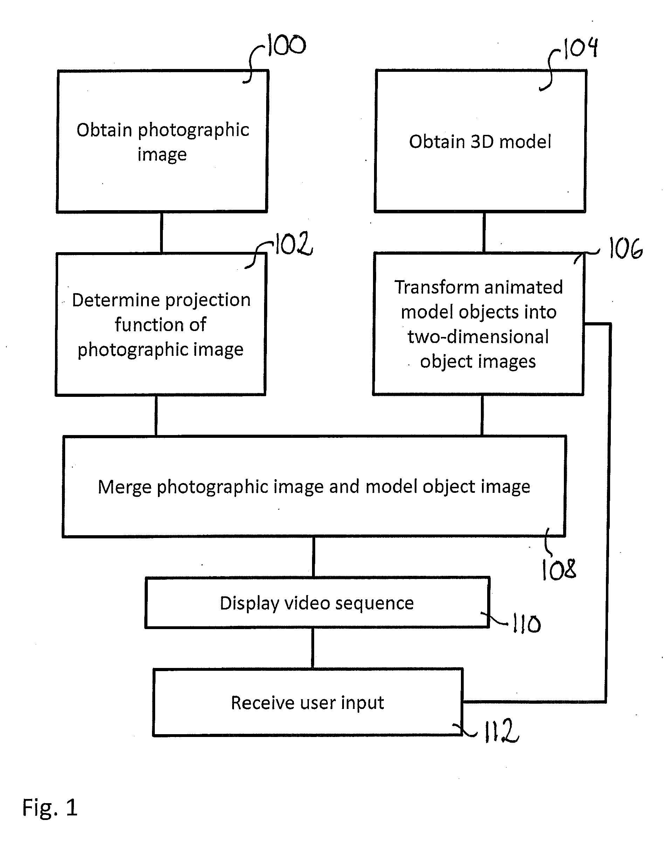

Fig. 1 shows a schematic overview over such a method for creation a simulation that may be used in mission rehearsal. Therein, in step 100, a photographic image of a scene is obtained. This photographic image may be recorded by a camera, or an existing image may be used which is obtained e.g. from an image archive. With the availability of large numbers of images in online archives which are provided e.g. by press photographers or by imaging services such as Google Earth, it will usually be possible to gain access to a photographic image for any desired location. Thus, the use of existing photographic images allows a significant time saving during mission preparation when schedules may be tight.

Subsequently, in step 102, a projection function of the photographic image is determined. This step comprises analyzing the photographic image in order to determine the mathematical relationship that maps points in three-dimensional space onto the two-dimensional photograph. As will be explained in greater detail later, this may comprise analyzing perspective distortions of the photographic image, such as e.g. identifying vanishing points for planes that can be identified in the photographic images by a user or by automated edge detection. Further, some information about the scaling of the photographic image relative to the three-dimensional reality may be used in order to determine the projection function. Such scaling can be supplied by measuring the size of structures within the image and comparing them to the known size of the corresponding real-world structure. If e.g. buildings, people or cars are depicted on the photographic image, information about the real-world sizes is generally readily available. This information can be used to resolve the degrees of freedom of the projection function by providing scaling factors for elements shown in the photographic image relative to the corresponding real-world elements.

Parallel to the above-described processing of the photographic image, the animated content of the video sequence is constructed as a three-dimensional computer model in step 104. Therein, no elaborate three-dimensional model needs to be generated for the structures shown in the photographic image, but it is sufficient to model only the animated objects such as persons or vehicles, Further, special effects such as explosions, smoke or the like may be modeled.

In step 106, for each frame of the animated video sequence, the animated model objects are transformed into two-dimensional object images, using the projection function determined based on the photographic image. Thus, the two-dimensional object images have the same perspective distortion and relative size as elements in the photographic image.

In step 108, the photographic image and the model object image are merged. As these images have been generated by the same projection function, there is no scale or perspective transformation of either the photographic image or the model object images that needs to be performed at this step. In the case of the photographic image, the projection function was applied by the camera at the time of recording the three-dimensional real scene as a photographic image, and in the case of the model object images, the mathematical projection function determined in step 102 has been applied in order to transform an animated three-dimensional model object into the two-dimensional model object images. Thus, the merging of step 108 may be a simple overlay of two images. Additionally, occlusions of model objects partly hidden behind structures shown in the photographic image may be taken into account in order to achieve a realistic scenario.

Thus, the above-described method constitutes a fast, efficient and cost-effective way of constructing a detailed simulation of an animated video sequence in an arbitrary real-world setting, without the need of constructing a full three-dimensional computer model for the whole scenario. Instead, existing photographic images can be used as a static scene and animated objects can simply be pasted into the photographic images. The three-dimensional model may comprise only the animated objects, which leads to a significant reduction in resource and time requirements when compared to a full three-dimensional model that comprises the full static background setting as well as the animated objects.

The merged images may then be displayed (see step 110) to a user, e.g. to a police officer during a mission rehearsal. The police officer may e.g. be equipped with a mock gun and tracking equipment. Reactions of the police officer, such as aiming and firing of the mock gun in response to the displayed video sequence, can be received as user input in step 112. In order to provide an interactive training method and device, the received user input may then be evaluated, the behavior of the animated model objects may be adjusted based on the received user input and the adjusted animated model objects may be transformed into two-dimensional object images as explained above (step 106).

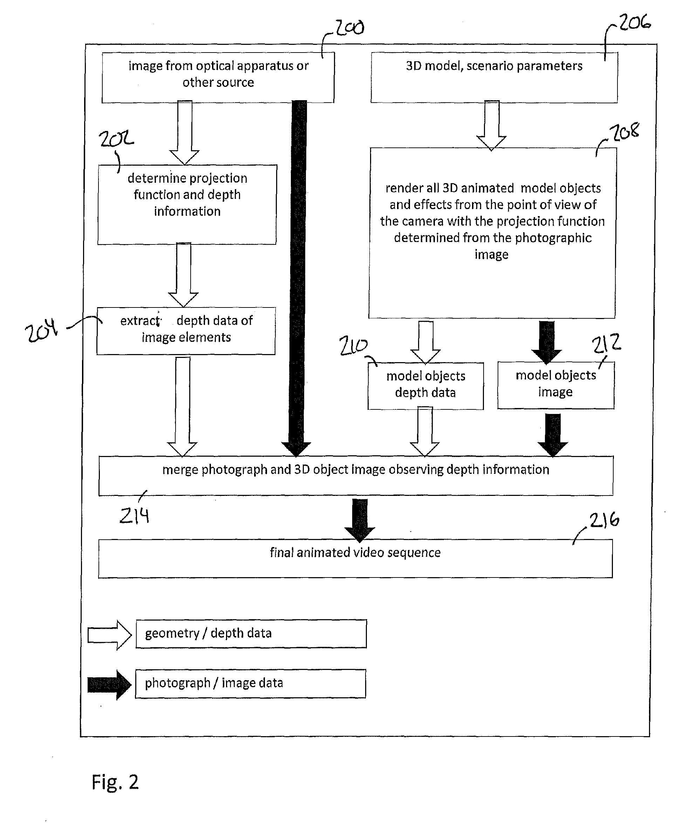

Fig. 2 shows a more detailed description of an embodiment of the method of Fig. 1. In Fig. 2, white arrows represent the processing of geometry and depth data, and black arrows relate to the processing of photograph and image data. First, in step 200, a photographic image is obtained from an optical apparatus such as a camera. The photographic image may also be obtained from another source, such as e.g. from an online or offline image archive. The photograph data will later be used directly for merging with the transformed model image data.

In step 202, the photographic image is analyzed in order to determine a projection function and in order to extract depth information of image elements. According to a first embodiment, single view metrology methods may be applied based on the detection of vanishing lines and points in the photographic images. Such vanishing lines and points may be identified by a user or may be identified automatically using edge and line detection techniques.

The application of a single view metrology method on the photographic image results in the definition of the homography matrix which allows the mapping of an image plane in the photographic image into a real-world object plane and vice versa. This is basically the inversion of the process used by 15th century painters when constructing their perspective views. This method can be used on imagery from arbitrary sources, provided the distortion of the used optical apparatus is within acceptable tolerances. From the homography matrix, a projection function for mapping 3D space to the 2D photographic image can be determined. According to embodiments, this may comprise determining a position of the camera recording the photographic image.

Further, an orientation and optical parameters of the camera may be determined. Therein, the optical parameters of the camera (camera intrinsics) may be used for defining the projection function, as will be explained in greater detail below.

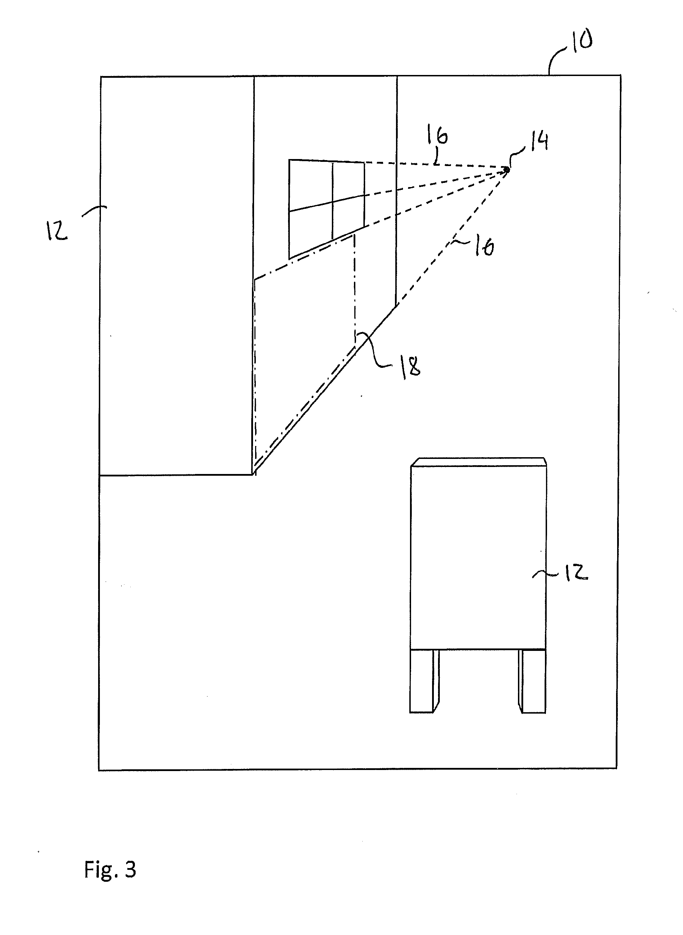

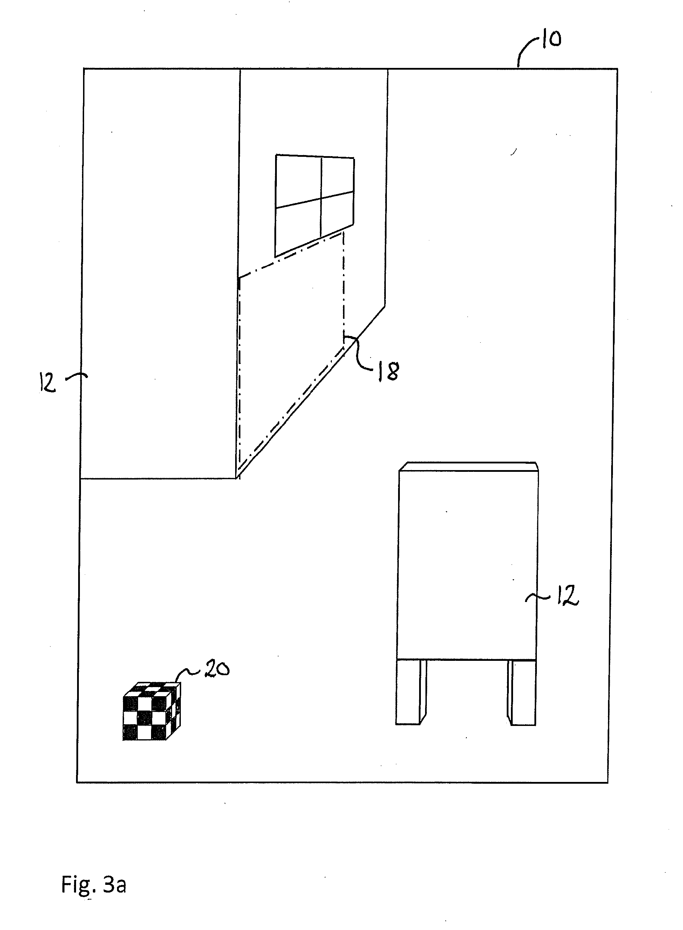

The projection function is similar to the transformation performed by the optical apparatus taking the original image. This function can be used to accurately derive depth information for selected image elements (step 204) as described subsequently in conjunction with Fig. 3.

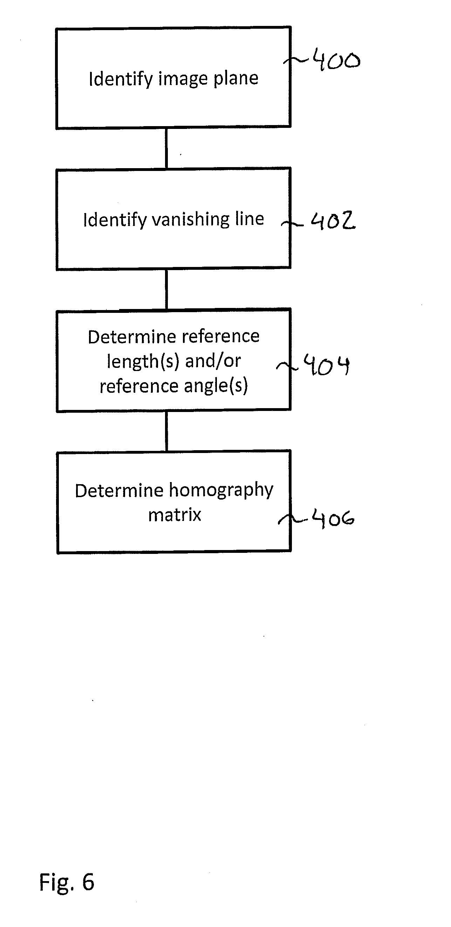

Fig. 3 shows a photographic image 10 which depicts a scene including elements 12 such as a house and a billboard. In the example shown in Fig. 3, the image 10 is a projection with a single vanishing point 14, which can be identified by extending vanishing lines 16 and finding their intersection. As will be explained below in conjunction with Fig. 6, the projection function that maps the three-dimensional scene onto the two-dimensional photographic image 10 can be determined based on an analysis of the vanishing points of the photographic image 10. In general, an image 10 will be a projection with more than one vanishing point. In order to determine the camera position and orientation in addition to the perspective distortion, three or more vanishing points of the image 10 may be analyzed.

Those elements 12 in the photographic image are identified which can interact with the animated scenario, wherein the remaining areas of the photographic image 10 may constitute a background that cannot interact with animated objects. Such elements 12 may e.g. comprise structures or buildings behind which an animated person or object may hide, elements which an animated person or object may pass through, such as doorways or openings, or elements which may in any other way interact with an animated object, such as e.g. structures which may be damaged or moved within the animated 3D model that will be explained in detail below. The selection of such elements 12 may be performed by a user or may be performed by automated processing based e.g. on edge or shape detection algorithms.

For example, a three-dimensional rectangle of user controlled size and position (the "caliper" 18) can be used to determine the depth and position information of elements in the photographic image 10. The caliper 18 is defined in 3D space and projected into the photographic image 10 using the projection function which was derived in step 202. This caliper 18 can be moved in all three dimensions in 3D space in order to make its 2D projection coincide precisely with a selected element 12 in the photographic image 10.

Further, the camera position and orientation may be used in order to determine the projection of the caliper 18 into the photographic image according to the camera view, as well as the later rendering of the three-dimensional model objects as two-dimensional object images for merging with the photographic image. This ensures that the photographic image and the rendered images of the caliper 18 or of the animated model objects can be merged without introducing distortions or inconsistencies.

As the caliper 18 is perspectively distorted using the projection function that maps three-dimensional space onto the two-dimensional photographic image 10, the three-dimensional coordinates of the caliper vertices are now reflecting the three-dimensional geometry of the coinciding image element 12 relative to the camera's position and orientation.

After applying the camera position / orientation transformation, the three-dimensional coordinates of the image element 12 are known and can be used to compute the depth information of every pixel representing this element 12 in the photographic image 10.

Returning to Fig. 2, after the processing described above, the depth data of image elements 12 has been extracted in step 204. The extracted depth information will later be used in the rendering process (see step 214 of Fig. 2) in order to merge the photographic image 10 with the rendered image of animated objects.

In parallel to the above-described processing of the photographic image, a three-dimensional model of at least one animated object is created in step 206. Therein, information determined from the photographic image, such as e.g. the location of buildings or objects in three-dimensional space, may be used as parameters for creating the three-dimensional model, e.g. as a location map that defines positions of elements of the photographic image within the three-dimensional model.

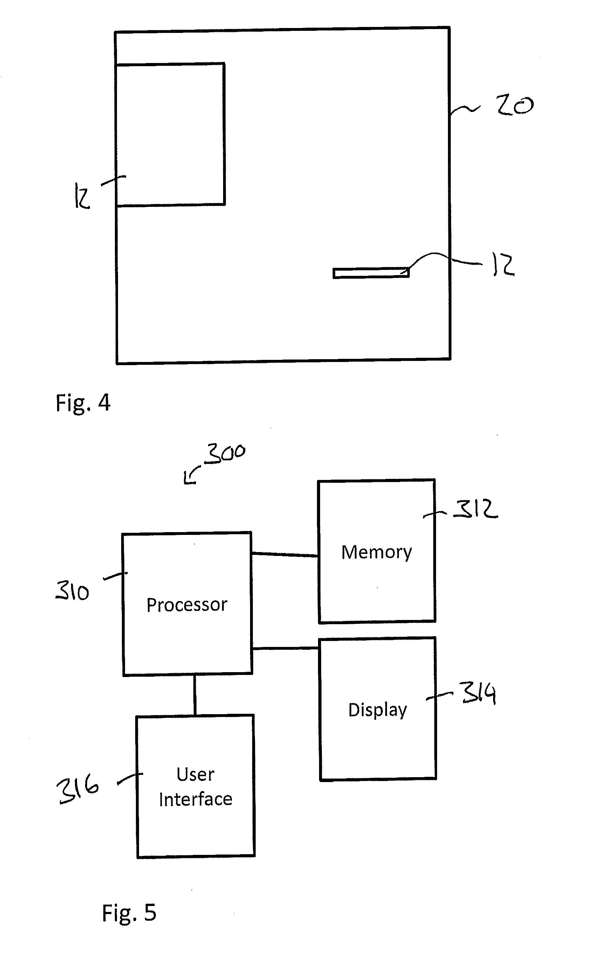

Fig. 4 shows an example of a simple top view plan 20 as an example of a location map that can be generated from the photographic image 10 shown in Fig. 3. The top view plan 20 can be used for defining parameters of the three-dimensional computer model, such as e.g. realistic movement paths for animated persons, animals or vehicles. An example for such a model parameter is that animated model persons may leave and enter an area which corresponds to a building in the photographic image only at the position where a door is shown in the photographic image, even though the door is not part of the three-dimensional computer model. Additionally, animated objects may be controlled within the three-dimensional model so that they do not walk through fixed structures shown in the photographic image.

In the top view plan 20, the positions and sizes of the elements 12 of the photographic image 10 are shown. It is noted that it is not necessary to provide three-dimensional model representations for the corresponding elements within the computer model, but it is sufficient to use the position and size information of the elements as derived from the photographic image 10 in order to control the motion and behavior of the animated model objects. Thus, information derived from the photographic image may be used as restriction during the construction of the three-dimensional model. In an example implementation, the location map may mark areas of the three-dimensional model space in order to restrict the motion parameters of the animated model object in a similar way as marked lines on a theater stage direct the actors' movements during rehearsals around structures that will be present in the final stage setting.

As an example, if the modeled scenario includes a person hiding behind the billboard shown in the photographic image 10 and, at a certain point in time, running towards the building, it is not necessary for the three-dimensional model to include a billboard and a building. Instead, the information regarding the positions and the sizes of the billboard and the building are sufficient in order to construct the animated person and in order to restrict its movement so that it makes sense within the scene shown in the photographic image. Thus, the computer model can show realistic behavior of the animated persons and objects that makes use of the local topography and setting of the scene shown in the photographic image, without having to include a full model representation of this topography and setting.

Returning to Fig. 2, in subsequent step 208, all animated objects are rendered using the projection function determined in step 202, so that the animated objects are converted into two-dimensional object images from the point of view of the camera that was used to record the photographic image. Therein, an animated object may comprise an animated person or vehicle or a visual effect such as an explosion or a shadow cast by an animated person or vehicle. For an animated video sequence, the conversion of three-dimensional objects and effects to two-dimensional object images can be done on a frame by frame basis. Further, geometrical data from the scenario depicted in the photographic image can be used to determine occlusions of animated objects by elements of the photographic image. Shadows cast by elements of the photographic image onto animated objects can be determined and modeled.

The rendering step 208 creates two different types of data: model object image data, i.e. two-dimensional images of the animated objects as seen from the camera's point of view (black arrow) and model object depth data, i.e. data relating to the three-dimensional coordinates of the animated model objects (white arrow).

In steps 210 and 212, the model object depth data and the model object image data are provided for merging the photograph and the animated object images in subsequent step 214.

Using high performance computer graphics equipment and advanced algorithms, the static background image will be "retouched" in real-time with information derived from the rendering process involving the animated objects. Occlusions of animated objects being partly or fully hidden behind elements 12 of the photographic image may be determined based on a comparison of the model object depth data for the animated object with the depth data of elements 12 of the photographic image. Thus, three-dimensional relationships, i.e. relative positioning of animated objects "in front of" or "behind" elements 12 of the photographic image, can be achieved correctly during the merging step 214, even though the merging is performed using the projected two-dimensional images. Using the Z-Buffer technique provided by graphics cards, object parts which are obstructed by elements of the photographic image may be eliminated and vice-versa.

For the merging, thus, four different data streams are input and used in constructing the final animated scenario video frame: photograph and model object image data (black arrow inputs to step 214) are mixed, wherein occlusions of photographic image elements and model objects are determined by the depth data that is supplied both for the elements of the photographic image and for the model objects (white arrow inputs to step 214)

In step 216, the animated video scene is displayed. Using computer graphics methods, the visual scene is displayed frame by frame (typically 60 times per second). First, the background image is loaded into the graphics card. The derived depth information is precisely aligned with the displayed image and loaded into the graphics card hardware as well.

As an optional modification, the three-dimensional model created in step 206 may comprise animated objects which interact with the elements 12 of the photographic image 10 (see Fig. 3).

The interactions of the computer controlled moving 3D model objects like people, vehicles, animals etc. and the elements 12 of the static background photograph 10 may include realistic computed dynamic shadows of the computer controlled 3D objects that are merged into the static photographic image. Therein, a shadow may be modeled by known 3D modeling techniques within the computer model and may then be projected onto elements 12 in the photographic image 10 using the depth information extracted from the photographic image.

Elements 12 in the static photographic image 10 may further cast shadows onto the computer controlled 3D model objects. These shadows can be modeled within the 3D computer model using the depth information extracted for the respective element 12 from the photographic image 10. Thus, the shadow of an element 12 of the photographic image may be created within the 3D computer model and be converted into a two-dimensional object image as described in conjunction with step 208 in Fig. 2, so that it can be merged into the photographic image 10 in step 214 as a model object image.

Further, elements of the photographic image, such as doors, windows etc. may be moved or changed. If image elements are marked as articulated, a 3D representation of the image element may be included into the 3D model. If the 3D representation is moved within the modeled scenario, the image element in the photographic image may be replaced with a rendering of the image element in its changed position. If the element was for example a door, the room behind the open door may be automatically rendered using user supplied information. Alternatively, images of elements in their moved/changed state may also be supplied e.g. from further photographs or from a computer modeling. These images may then be merged with the original photographic image as described above, i.e. after applying the projection function and based on the associated depth information.

The animated objects of the 3D computer model may further comprise visual effects caused by the interaction between the moving computer controlled 3D model and elements of the static photograph with the background image, such as fire, explosion, smoke, debris etc.. These effects can be transformed into model object images and merged into the photographic image as described above in conjunction with steps 206-214 of Fig. 2. Therein, potential occlusions can also be observed using the depth information of the model objects and of the photographic image elements.

Fig. 5 shows a device 300 which may be used to create and display an animated video sequence as described above in a simulation and training setting. The device 300 comprises a processor 310 which is adapted to perform a method for generating an animated video sequence as described above. A memory 312 is provided for storing the photographic image and the parameters and construction details related to the three-dimensional model. The animated video sequence, which has been generated as described above, may be displayed on a display 314, which typically comprises a projection of the animated video sequence on a screen.

A user interface 316 may be provided for user interaction with the animated scene. Based on received user input, subsequent images in the animated video sequence may be generated such that a user can interact with the animated video sequence. In a police force training and education environment, the user interface 316 may comprise an electronic shooting range, wherein the aiming and firing of a mock gun can be detected as user input. The modeled scenario may be adjusted according to the user input, so that animated model persons or objects may react to the user input according to predefined model parameters. For example, an animated person who has been shot can be modeled to collapse, or an animated person who has been shot at but was missed can be modeled to run to safety or to return fire, depending on predefined model parameters. The displayed animated video scene will reflect the model state that is determined based on user input.

Returning to the processing related to the extraction of the projection function from the photographic image (see step 202 in Fig. 2), the following description provides further examples on how a projection function and depth information of a photographic image may be determined according to different embodiments of the claimed method.

As already outlined above, and as will be described in conjunction with Fig. 6 below, the photographic image may be calibrated in order to be able to extract a projection function (step 202 in Fig. 2). Such a calibration may be performed, as described above, by measuring a distance in the photographic image and comparing the measurement to the corresponding distance of the real object shown in the photographic image. In a second embodiment, the processing of step 202 is simplified by inserting a calibration pattern into the photographic image at the time it is taken. As in the first embodiment described above, it is not necessary for the second embodiment that the parameters of the optical equipment used for recording the photographic image and its exact position are known. According to the second embodiment, image processing/ computer vision methods are applied based on the detection of the calibration pattern.

As shown in Fig. 3a, the image 10 may comprise several elements 12. The calibration pattern 20 may e.g. comprise a cube of known size and with a pattern that is particularly easy to detect by image processing methods, such as e.g. a black and white checkerboard pattern. An example for such a calibration cube 20 is shown in Fig. 3. Using edge detection, pattern detection and/or other suitable image processing techniques, the location, size and perspective distortion of the calibration cube 20 in the photographic image 10 can be determined. Then, the projection function that maps real-world structures onto photographic image elements 12 can be determined, and a caliper 18 may be used for determining depth information of selected elements 12 of the photographic image, as described above in conjunction with Fig. 3. Thus, instead of requiring user input for identifying an element of known size in the photographic image and supplying the calibration measurements, the second embodiment facilitates an automated processing of the photographic image.

Typically, one photographic image is taken with the calibration pattern and one photographic image is taken without the calibration pattern using the same optical device placed at the exact same position. Then, computer vision methods may be used to determine the projection function from the known position, depth information and size of the calibration pattern in step 202. In principle, however, the animated video sequence could also be generated based on only one photographic image which is taken with the calibration pattern. The calibration pattern can then either be left in the final merged image or it may be replaced by a "patch" that is either modeled based on user-supplied information or that is determined from another photographic image and transformed using a suitable projection function.

Fig. 6 gives a schematic overview of the processing that may be performed when determining a projection function from a photographic image according to the first or the second embodiment. First, an image plane is identified in the photographic image (step 400). If a three-dimensional calibration pattern has been inserted into the photographic image, an image plane of the calibration pattern may be identified. Alternatively, as shown in Fig. 3, an image plane of a structure such as e.g. a wall or a window pane of the building shown in the photograph 10 may be identified based on edge detection techniques.

In this example, it is assumed that the camera has applied a plane projective transformation to the three-dimensional objects in order to produce the two-dimensional photographic image 10. For the identified plane, the edge lines are extended and vanishing lines are identified which define a vanishing point at their intersection (step 402 in Fig. 6, and vanishing lines 16 and vanishing point 14 in Fig. 3). In general, if a rectangular image plane can be identified, a pair of vanishing points in two orthogonal directions can be determined.

In general, the mapping between an image plane **x** in the photographic image and its corresponding object plane **X** in the three-dimensional world is a 3x3 homography matrix H such that **x**=H**X**, wherein H has eight degrees of freedom. The homography matrix maps a real-world object plane onto an image plane of the two-dimensional photographic image. If real-world relationships (distances, angles) are known for four points of the photographic image of which no three points are collinear, then the homography matrix H can be determined uniquely. Thus, in step 404, reference lengths, positions and/or angles for elements in the photographic image are determined in order to provide calibration information that is sufficient for determining a unique homography matrix.

According to the first embodiment, this may be achieved by using known sizes of real-world objects such as buildings, doors, windows, vehicles or the like. According to the second embodiment, the calibration pattern may be used for extracting calibration information from the photographic image.

Based on the vanishing lines and points of an image plane determined in step 402 and from the calibration factors provided in step 404, the homography matrix can then be determined at step 406. From the homography matrix, a projection function can be determined that maps a point in three-dimensional space onto a point on the two-dimensional photographic image.

The homography matrix H may be composed of several elements, which are related to the internal camera parameters (that define the projection function as explained below) and to the external camera parameters (which define the camera position and direction).

$$H = K \, [R \; T]$$

K: internal camera parameters (intrinsics)

$$\begin{bmatrix} Fx & 0 & Cx \\ 0 & Fy & Cy \\ 0 & 0 & 1 \end{bmatrix}$$

Fx,Fy: focal length.
Cx, Cy: offset of the camera optical axis relative to the center of the image
[R T]: external camera parameters

$$\begin{bmatrix} R11 & R12 & R13 & T1 \\ R21 & R22 & R23 & T2 \\ R31 & R32 & R33 & T3 \end{bmatrix}$$

R defines the rotation of the object coordinate system relative to the camera coordinate system T defines the translation of the object coordinate system relative to the camera coordinate system

The above-stated relationships describe a "perfect" camera which does not introduce any optical defects. Severe deformations of the image, e.g. due to aberrations of the camera optics, may be rectified by using image processing techniques prior to determining the projection function.

The determination of the projection function according to the first embodiment (i.e. by using vanishing lines) and according to the second embodiment (i.e. by using a calibration pattern) may use similar mathematical methods. As an example, image processing functions as supplied by the OpenCV (Open Source Computer Vision) library may be utilized.

Further, the homography matrix may be used for mapping the three-dimensional caliper rectangle 18 (see Fig. 3) into the photographic image 10 and thus to determine size, position and depth information of image elements by moving and resizing the caliper 18 in three-dimensional space until its projection coincides with the selected image element. Depth information for elements 12 of the photographic image 10, as described in conjunction with step 204 of Fig. 2, can thus be extracted from the known depth information of the three-dimensional representation of the caliper rectangle together with the homography matrix.

Returning to the discussion of different embodiments for the determination of a projection function and depth information of the photographic image (see step 202 of Fig. 2), a third embodiment involves the use of depth information recorded together with the photographic image, e.g. by the use of a device which will simultaneously take a photograph and measure the depth of every single picture element (pixel) using accurate laser scanning techniques.

Thus, in contrast to the processing in steps 202 and 204 of Fig. 2 which is performed in the above-described first and second embodiments, depth information of elements of the photographic image does not need to be determined based on a projection function. Instead, the depth information is provided by the laser scanner data. For the merging step 214 of Fig. 2 a projection function for the photographic image is determined which can be used in step 208 for transforming the three-dimensional model objects into two-dimensional object images. The determination of the projection function may be performed using the depth information provided by the laser scanner data.

While this is a simple, fast and accurate technique, it is at the same time the most expensive and least practical one to apply. Mounting and calibrating the laser scanner, scanning with a high power laser in crowded urban environments etc. can cause numerous problems. This calibration method has the advantage of requiring very little post processing , however, at the cost of requiring expensive laser scanning equipment and not being able to use existing photographic images supplied e.g. from an image archive.

Alternatively, stereo cameras and the "depth map" method may be used to record depth information. However, stereo cameras do typically not produce geometrical information with the required accuracy, such that it may be necessary to combine this calibration method with either the first or the second above-described embodiments in order to determine depth information with the required level of accuracy when using stereo cameras.

The various embodiments of the present method and device enable the generation of an animated video sequence by using a photographic image of the background scene together with a simple three-dimensional model of at least one animated object. The animated content can be merged into the photographic image by transforming the three-dimensional animated object into a series of two-dimensional images with the same perspective distortion and sizing as the photographic image. Thus, a realistic video sequence of the animated object acting in the photographed background scene can be achieved. From extracted depth information of elements of the photographic image, occlusion and interaction between the photographic image and the animated objects can be achieved, so that the animated video sequence may further provide a realistic depiction of animated objects e.g. hiding behind structures shown in the photographic image. As only the animated content is modeled as a three-dimensional computer model, the present method and device provide a fast, efficient and cost-effective way of producing an animated video sequence set in an arbitrary real-world scene.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for generating an animated video sequence, comprising:

   - obtaining a photographic image of a scene;
   - determining a projection function of the photographic image, wherein the projection function maps the three-dimensional scene onto the two-dimensional photographic image;
   - obtaining a three-dimensional model of an animated object;
   - transforming the animated object based on the obtained projection function into a series of two-dimensional object images; and
   - merging the two-dimensional object images with the photographic image.

2. Method according to claim 1, wherein the merging is based on depth information of the two-dimensional object images and on depth information of elements of the photographic image.

3. Method according to claim 2, further comprising:

   - determining depth information related to the elements of the photographic image based on the projection function.

4. Method according to any one of claims 1 to 3, further comprising:

   - determining a location map of the scene, wherein positions and sizes of elements of the location map correspond to positions and sizes of elements in the photographic image.

5. Method according to claim 4, wherein motion parameters of the animated object are determined according to the positions and sizes of the elements of the location map.

6. Method according to any one of claims 1 to 5, wherein the step of obtaining the projection function comprises analyzing at least a part of the photographic image using a single view metrology method in order to obtain a homography matrix which allows the mapping of a real-world object plane into an image plane in the photographic image.

7. Method according to claim 6, wherein analyzing at least a part of the photographic image comprises detection of vanishing lines.

8. Method according to any one of claims 1 to 5, wherein the photographic image comprises an image of a calibration pattern, and wherein the step of obtaining the projection function is performed using the calibration pattern in the photographic image.

9. Method according to claim 2, wherein the depth information of the elements of the photographic image is provided by a laser scanning device.

10. Method according to any one of claims 1 to 9, wherein the step of merging the two-dimensional object images with the photographic image comprises determining occlusions and eliminating parts of the two-dimensional object images which are obstructed by elements of the photographic image and vice versa.

11. Method according to any one of claims 1 to 10, wherein obtaining the projection function comprises determining a position of a camera, a camera orientation and optical parameters for the photographic image.

12. Method according to any one of claims 1 to 11, further comprising:

   - displaying the merged images as an animated video sequence;
   - receiving user input; and
   - controlling the three-dimensional model according to the user input.

13. Method according to claim 12, wherein a subsequent image in the series of two-dimensional object images is selected based on the user input.

14. Computer program product comprising instructions, which, when loaded into a processor of a suitable computing device, cause the computing device to perform the method according to any one of claims 1 to 13.

15. Device for providing an animated interactive video simulation of a scene, comprising:

   - a memory for storing a photographic image of a scene and for storing a three-dimensional model of an animated object;
   - a processor adapted to:

      - determine a projection function of the photographic image, wherein the projection function maps the three-dimensional scene onto the two-dimensional photographic image;
      - transform the animated object based on the obtained projection function into a series of two-dimensional object images; and
      - merge the two-dimensional object images with the photographic image;

   - a display for displaying the merged images as an animated video sequence; and
   - a user interface adapted to receive user input, wherein the processor is further adapted to select a subsequent image in the series of two-dimensional object images based on user input received via the user interface during the display of the animated video sequence.

Fig. 1

_200_ _206_

| image from optical apparatus or other source | 3D model, scenario parameters |

_202_

determine projection function and depth information

_208_

render all 3D animated model objects and effects from the point of view of the camera with the projection function determined from the photographic image

_204_

extract depth data of image elements

_210_

| model objects depth data | model objects image | _212_ |

merge photograph and 3D object image observing depth information

_214_

_216_

final animated video sequence

| → | geometry / depth data |
| ➤ | photograph / image data |

Fig. 2

Fig. 3

Fig. 3a

~ 20

12

12

Fig. 4

300

310    Processor    Memory    312

Display    314

316    User
Interface

Fig. 5

Fig. 6

Europäisches
Patentamt

European
Patent Office

Office européen
des brevets

## EUROPEAN SEARCH REPORT

Application Number

EP 13 15 8736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 507 235 A1 (LONSING WERNER G [US]) 16 February 2005 (2005-02-16) | 1,14,15 | INV.<br>G06T13/20 |
| Y | * columns 1,3,7,28 *<br>* columns 30,36,39 *<br>* columns 44-46 * | 2,3,6-11 | G06T19/00 |
| | ----- | | |
| Y | US 6 151 009 A (KANADE TAKEO [US] ET AL) 21 November 2000 (2000-11-21)<br>* abstract * | 2,3,9,10 | |
| | ----- | | |
| Y | US 6 166 744 A (JASZLICS IVAN J [US] ET AL) 26 December 2000 (2000-12-26) | 2,9 | |
| A | * abstract *<br>* column 1, line 17 - line 21 *<br>* column 1, line 52 - line 56 *<br>* column 2, line 39 - line 55 *<br>* page 4, line 43 - line 44 *<br>* column 6, line 25 - line 67 *<br>* column 8, line 7 - line 27 * | 1,14,15 | |
| | ----- | | |
| X | US 2006/044327 A1 (OKUNO YASUHIRO [JP] ET AL) 2 March 2006 (2006-03-02)<br>* paragraph [0001] - paragraphs [0005], [0085], [0102]; claim 1 * | 1,14,15 | TECHNICAL FIELDS SEARCHED (IPC)<br><br>G06T |
| | ----- | | |
| Y | US 2010/295948 A1 (XIE DONGHAI [CN] ET AL) 25 November 2010 (2010-11-25)<br>* paragraphs [0010], [0031], [0035], [3766], [0073] * | 6,7,11 | |
| | ----- | | |
| Y | US 6 437 823 B1 (ZHANG ZHENGYOU [US]) 20 August 2002 (2002-08-20)<br>* abstract * | 8 | |
| | ----- | | |
| Y | WO 2012/044308 A1 (HEWLETT PACKARD DEVELOPMENT CO [US]; KESHET RENATO [IL]; AHARON MICHAL) 5 April 2012 (2012-04-05)<br>* the whole document * | 6,7 | |
| | ----- | | |

-/--

~~The present search report has been drawn up for all claims~~

| Place of search | Date of completion of the search | Examiner |
|---|---|---|
| Berlin | 13 December 2013 | Reise, Frank |

Europäisches
Patentamt

European
Patent Office

Office européen
des brevets

# EUROPEAN SEARCH REPORT

Application Number

EP 13 15 8736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/045701 A1 (SCOTT KATHERINE [US] ET AL) 25 February 2010 (2010-02-25) * the whole document * | 6 | |
| A | Antonio Criminisi ET AL: "Single-View Metrology: Algorithms and Applications (Invited Paper)" In: "Pattern Recognition", 10 October 2002 (2002-10-10), Springer Berlin Heidelberg, Berlin, Heidelberg, XP055091230, ISBN: 978-3-54-044209-7 vol. 2449, pages 224-239, DOI: 10.1007/3-540-45783-6_28, * the whole document * | 6 | |

TECHNICAL FIELDS
SEARCHED (IPC)

The present search report has been drawn up for all claims

| Place of search | Date of completion of the search | Examiner |
|---|---|---|
| Berlin | 13 December 2013 | Reise, Frank |

EPO FORM 1503 03.82 (P04C01)

Europäisches
Patentamt

European
Patent Office

Office européen
des brevets

**Application Number**

EP 13 15 8736

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-3, 6-11, 14, 15

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 13 15 8736

The Search Division considers that the present European patent application does not comply with the
requirements of unity of invention and relates to several inventions or groups of inventions, namely:

     1. claims: 1-3, 9, 10, 14, 15

          inserting an animated virtual object into a photographic
          image of a real scene, taking into account occlusions and
          using depth information of the generated object images and
          of elements of the photographic image
          ---

     2. claims: 4, 5

          inserting an animated virtual object into a photographic
          image of a real scene and controlling motion parameters of
          the virtual object using a location map of the scene
          ---

     3. claims: 6-8, 11

          obtaining a projection function of a photographic image for
          inserting an animated virtual object into a photographic
          image of a real scene
          ---

     4. claims: 12, 13

          inserting an animated virtual object into a photographic
          image of a real scene and controlling the animation based on
          user input
          ---

## ANNEX TO THE EUROPEAN SEARCH REPORT
## ON EUROPEAN PATENT APPLICATION NO.

EP 13 15 8736

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2013

| Patent document cited in search report | | Publication date | Patent family member(s) | | Publication date |
|---|---|---|---|---|---|
| EP 1507235 | A1 | 16-02-2005 | EP 1507235 A1<br>US 2005035980 A1<br>US 2009051682 A1 | | 16-02-2005<br>17-02-2005<br>26-02-2009 |
| US 6151009 | A | 21-11-2000 | NONE | | |
| US 6166744 | A | 26-12-2000 | AU 1797099 A<br>US 6166744 A<br>WO 9927496 A1 | | 15-06-1999<br>26-12-2000<br>03-06-1999 |
| US 2006044327 | A1 | 02-03-2006 | JP 4227561 B2<br>JP 2005346468 A<br>US 2006044327 A1 | | 18-02-2009<br>15-12-2005<br>02-03-2006 |
| US 2010295948 | A1 | 25-11-2010 | CN 101894366 A<br>US 2010295948 A1 | | 24-11-2010<br>25-11-2010 |
| US 6437823 | B1 | 20-08-2002 | NONE | | |
| WO 2012044308 | A1 | 05-04-2012 | NONE | | |
| US 2010045701 | A1 | 25-02-2010 | NONE | | |

EPO FORM P0459

For more details about this annex : see Official Journal of the European Patent Office, No. 12/82